# EUROPÄISCHE PATENTANMELDUNG

(11) **EP 4 209 687 A1**
(43) Veröffentlichungstag der Anmeldung: **12.07.2023**
(21) Anmeldenummer: 23150638.7
(22) Anmeldetag: 08.01.2023
(51) Int. Cl.: F16B 12/22, F16B 12/24, A47B 47/00, F16B 21/06

(54) **MÖBEL FÜR EIN FREIZEITFAHRZEUG UND SYSTEMBAUKASTEN ZUR MONTAGE VON MÖBELTEILEN**

(30) Priorität: 10.01.2022 DE 102022100437
(71) Anmelder: Hymer GmbH & Co. KG, 88339 Bad Waldsee (DE)
(72) Erfinder: Steigmiller, Anton, 88444 Ummendorf (DE)
(74) Vertreter: Waller, Stefan

(57) **Zusammenfassung**

Ein Systembaukasten (3) für Verbindungselemente (4), die zur verdeckten und werkzeuglosen Montage von Möbelteilen (5, 6) eines Freizeitfahrzeugs (2), insbesondere eines Wohnmobils oder Wohnwagens, dienen, umfasst mehrere Verbindungselementtypen (15, 16, 17). Jeder Verbindungselementtyp (15, 16, 17) ist hierbei zumindest durch eine erste Anbindungszone (7) für ein erstes Möbelteil (5) und eine zweite Anbindungszone (8) für ein zweites Möbelteil (6) charakterisiert. Ferner sind ein Möbel (1), ein Freizeitfahrzeug (2) und ein Montageverfahren angegeben.

## Beschreibung

Die Erfindung betrifft einen Systembaukasten für Verbindungselemente, die zur verdeckten und werkzeuglosen Montage von Möbelteilen eines Freizeitfahrzeugs dienen, Möbel für ein Freizeitfahrzeug, ein Freizeitfahrzeug, insbesondere ein Wohnmobil oder einen Wohnwagen, und ein Montageverfahren zur Montage eines Möbels für ein Freizeitfahrzeug. Speziell betrifft die Erfindung das Gebiet der Freizeitfahrzeuge, die als Wohnmobil oder Wohnwagen ausgestaltet sind.

Aus der DE 6941341 U ist ein Dübel zum Zusammenfügen von Möbelteilen bekannt. Der bekannte Dübel weist an einem Ende einen mit einer Umfangsriffelung versehenen Fuß, am entgegengesetzten Ende einen Kopf sowie im Anschluss an den Fuß einen Schaft und zwischen Schaft und Kopf einen Hals auf. Hierbei besteht der Fuß mit dem Schaft, dem Hals und dem Kopf in einem Stück aus Kunststoff. Hierdurch ist ein Dübel geschaffen, dessen Teile in einem einzigen Werkzeug hergestellt werden und der nach der Herstellung keiner Montagearbeit mehr bedarf. Der Kunststoff für den Dübel kann ein Thermoplast, vorzugsweise ein Polyamid, sein. Der Polyamid kann glasfaserverstärkt sein.

Denkbar ist es, dass Möbelteile mittels Dübel oder Nut-Feder zueinander positioniert werden. Die feste Verbindung der Möbelteile zueinander kann durch sichtbare Verschraubung oder unter Zuhilfenahme von Kunststoffteilen, die sichtbar bleiben, erreicht werden. Aufgabe der Erfindung ist es, einen Systembaukasten für Verbindungselemente, die zur verdeckten und werkzeuglosen Montage von Möbelteilen eines Freizeitfahrzeugs dienen, Möbel für ein Freizeitfahrzeug, ein Freizeitfahrzeug, insbesondere ein Wohnmobil oder einen Wohnwagen, und ein Montageverfahren zur Montage eines Möbels für ein Freizeitfahrzeug anzugeben, die verbessert ausgestaltet sind. Insbesondere kann sich hierbei die Aufgabe stellen, eine verdeckte und werkzeuglose Montage zu ermöglichen bzw. zu realisieren, die in verbesserter Weise durchführbar ist und insbesondere auch die Montage von Leichtbaumaterialien, insbesondere in Sandwichbauweise, ermöglicht.

Die Aufgabe wird durch einen Systembaukasten mit den Merkmalen des Anspruchs 1, ein Möbel mit den Merkmalen des Anspruchs 8, ein Freizeitfahrzeug mit den Merkmalen des Anspruchs 10 und ein Montageverfahren mit den Merkmalen des Anspruchs 11 gelöst. Vorteilhafte Weiterbildungen der Erfindung sind in den Unteransprüchen angegeben.

Die Aufgabe wird durch einen Systembaukasten für Verbindungselemente, die zur verdeckten und werkzeuglosen Montage von Möbelbauteilen eines Freizeitfahrzeugs, insbesondere eines Wohnmobils oder eines Wohnwagens, dienen, gelöst, wobei mehrere Verbindungselementtypen vorgesehen sind und wobei jeder Verbindungselementtyp zumindest durch eine erste Anbindungszone für ein erstes Möbelteil und eine zweite Anwendungszone für ein zweites Möbelteil charakterisiert ist.

Die Aufgabe wird ferner durch ein Möbel für ein Freizeitfahrzeug, insbesondere für ein Wohnmobil oder einen Wohnwagen, mit einem ersten Möbelteil und zumindest einem zweiten Möbelteil gelöst, die durch zumindest ein Verbindungselement verbunden sind, das aus einem solchen Systembaukasten ausgewählt ist.

Ferner wird die Aufgabe durch ein Freizeitfahrzeug, insbesondere ein Wohnmobil oder einen Wohnwagen, mit zumindest einem solchen Möbel gelöst. Außerdem wird die Aufgabe durch ein Montageverfahren zur Montage eines Möbels für ein Freizeitfahrzeug, insbesondere für ein Wohnmobil oder einen Wohnwagen, gelöst, wobei ein erstes Möbelteil mittels zumindest eines Verbindungselements mit einem zweiten Möbelteil verbunden wird, und wobei das Verbindungselement aus einem solchen Systembaukasten ausgewählt wird.

Vorteilhaft ist es, dass sich die Verbindungselementtypen bezüglich der ersten Anbindungszone unterscheiden, wobei die erste Anbindungszone je Verbindungselementtyp aus zumindest zwei Anbindungstypen, die Reibschweißen und/oder Leimen beziehungsweisen Kleben und/oder Schrauben und/oder Spreizen und/oder Doppelspreizen umfassen, ausgewählt ist. Somit kann für die Montage bezüglich des ersten Möbelteils eine bestimmte Anbindung vorgegeben sein, wobei aus dem Systembaukasten das geeignete Verbindungselement zuverlässig ausgewählt werden kann. Dies ermöglicht eine zuverlässige Montage.

Vorteilhaft ist es auch, dass sich die Verbindungselementtypen bezüglich der zweiten Anbindungszone unterscheiden, wobei die zweite Anbindungszone je Verbindungselementtyp aus zumindest zwei Anbindungstypen, die zumindest einen Einfach-Pilzkopf und/oder zumindest einen Zweifach-Pilzkopf umfassen, ausgewählt sind. Hierdurch kann je nach Belastung und Ausgestaltung des zweiten Möbelteils der Verbindungselementtyp in Bezug auf die zweite Anbindungszone bestimmt werden.

Hierbei ist es ferner vorteilhaft, dass die Anbindungstypen für die zweite Anbindungszone Einfach-Pilzköpfe, die runde Einfach-Pilzköpfe und/oder flachovale Einfach-Pilzköpfe umfassen, und/oder Zweifach-Pilzköpfe, die runde Zweifach-Pilzköpfe und/oder flachovale Zweifach-Pilzköpfe umfassen, umfasst. Gegebenenfalls können auch Mehrfach-Pilzköpfe in entsprechender Weise vorgesehen sein. Hierdurch kann insbesondere in Bezug auf das Material beziehungsweise die Bauweise des zweiten Möbelteils ein geeigneter Anbindungstyp ausgewählt werden.

Vorteilhaft ist es, dass die Verbindungselementtypen so ausgeführt sind, dass der Anbindungstyp flachovaler Pilzkopf beziehungsweise die Anbindungstypen flachovale Pilzköpfe der zweiten Anbindungszone nur mit dem Anbindungstyp Doppelspreizen der ersten Anbindungszone kombiniert ist. Hierdurch können insbesondere in vorteilhafter Weise Querkräfte oder Drehmomente aufgenommen werden. Hierdurch kann insbesondere eine geometrische Anpassung an inhomogene Belastungen erfolgen.

Ferner ist es vorteilhaft, dass die Verbindungselementtypen so ausgeführt sind, dass der Anbindungstyp runder Pilzkopf beziehungsweise die Anbindungstypen runde Pilzköpfe nur mit den Anbindungstypen Reibschweißen, Leimen beziehungsweise Kleben, Schrauben und Spreizen kombiniert sind. Hierdurch können insbesondere in vorteilhafter Weise Zugkräfte und homogene Querkräfte bezüglich einer Längsachse des jeweiligen Verbindungselements in vorteilhafter Weise aufgenommen werden.

Außerdem können in vorteilhafter Weise ein oder mehrere zusätzliche Sonderverbindungselementtypen vorgesehen sein. Im jeweiligen Anwendungsfall kann dann gezielt auch ein Verbindungselement für besondere Zwecke montiert werden.

Speziell bei einem Möbel für ein Freizeitfahrzeug ist es von Vorteil, dass das zweite Möbelteil eine Sandwichplatte aufweist. Speziell kann der Systembaukasten so realisiert werden, dass auch Möbelteile in Sandwichbauweise montiert werden können.

Weitere Vorteile und Einzelheiten der Erfindung werden anhand der in den schematischen Figuren dargestellten Ausführungsbeispielen näher erläutert. Hierbei zeigen:
- Fig. 1: Ein Möbel für ein Freizeitfahrzeug in einer auszugsweisen, schematischen Schnittdarstellung entsprechend einem Ausführungsbeispiel der Erfindung;
- Fig. 2: ein Möbel für ein Freizeitfahrzeug in einer auszugsweisen, schematischen Darstellung entsprechend einer abgewandelten Ausgestaltung, wobei ein Zustand während einer Montage veranschaulicht ist;
- Fig. 3: eine Tabelle zur Veranschaulichung eines Systembaukastens für Verbindungselemente entsprechend dem Ausführungsbeispiel und
- Fig. 4: ein Möbel in einer auszugsweisen, schematischen Darstellung entsprechend einer abgewandelten Ausgestaltung, wobei ein Zustand während einer Montage dargestellt ist.

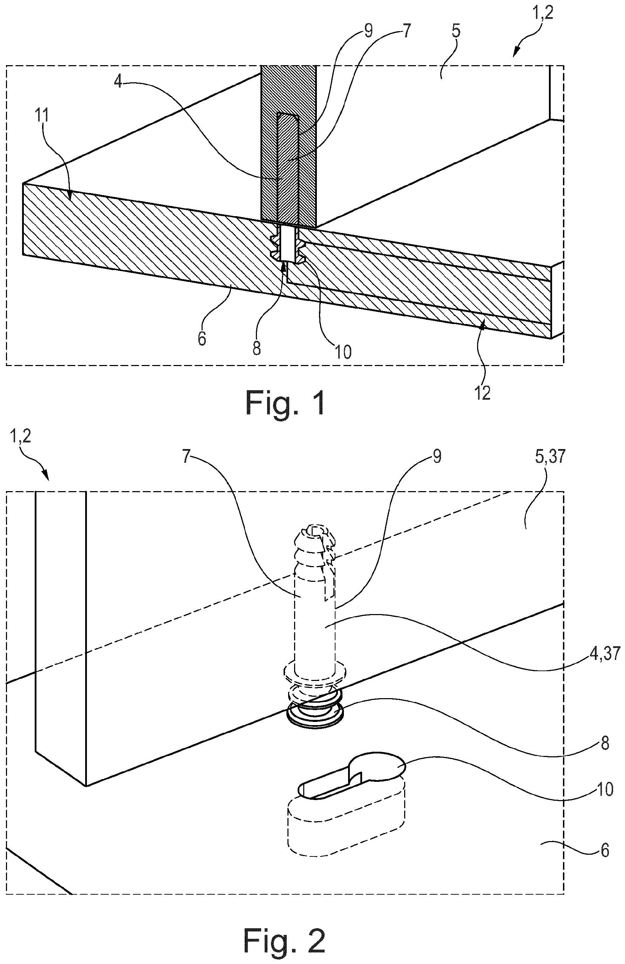

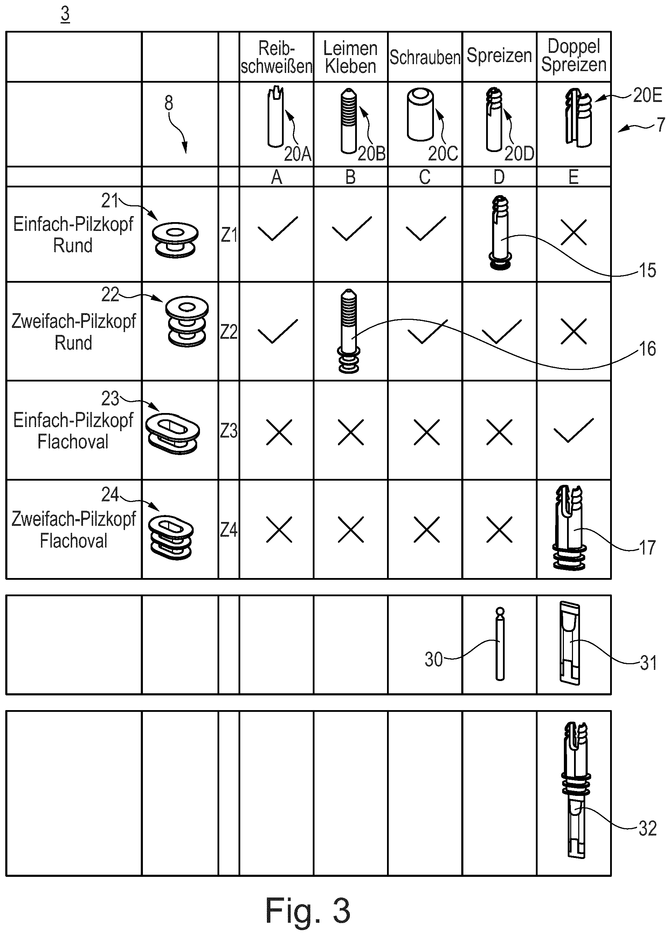

Fig. 1 zeigt ein Möbel 1 für ein Freizeitfahrzeug 2 in einer auszugsweisen, schematischen Schnittdarstellung entsprechend einem Ausführungsbeispiel. Das Freizeitfahrzeug 2 kann insbesondere als Wohnmobil oder Wohnwagen ausgestaltet sein. Das Möbel 1 dient zur Veranschaulichung eines Systembaukastens 3, der anhand von Fig. 3 näher erläutert ist. Entsprechend dem Systembaukasten 3 werden Verbindungselemente 4 ausgewählt, um ein erstes Möbelteil 5 des Möbels 1 mit einem zweiten Möbelteil 6 des Möbels 1 zu verbinden. Auf diese Weise können ein oder mehrere Möbel 1 des Freizeitfahrzeugs 2 montiert werden.

Ein Verbindungselement 4 weist eine erste Anbindungszone 7 und eine zweite Anbindungszone 8 auf. Das erste Möbelteil 5 weist eine Ausnehmung 9 für die erste Anbindungszone 7 des Verbindungselements 4 auf. Das zweite Möbelteil 6 weist eine Ausnehmung 10 für die zweite Anbindungszone 8 des zweiten Möbelteils 6 auf.

Die Ausnehmungen 9, 10 können in diesem Ausführungsbeispiel als Bohrungen 9, 10 ausgestaltet sein. Die erste Anbindungszone 7 des Verbindungselements 4 befindet sich dann zumindest im Wesentlichen in der Bohrung 9, während sich die zweite Anbindungszone 8 des Verbindungselements 4 zumindest im Wesentlichen in der Bohrung 10 befindet. Hierbei können Hilfsstoffe, wie ein Kleber oder ein Leim, zum Einsatz kommen.

Zur Vereinfachung der Darstellung sind in Fig. 1 zwei mögliche Ausgestaltungen des zweiten Möbelteils 6 veranschaulicht. Auf der linken Seite ist eine Ausgestaltung 11 des Möbelteils 6 als Sperrholzplatte 11 oder dergleichen dargestellt. Auf der rechten Seite ist eine Ausgestaltung des Möbelteils 6 als Sandwichplatte 12 beziehungsweise in einer Sandwichbauweise dargestellt. Hierbei kann das zweite Möbelteil 6 jeweils vollständig als Sperrholzplatte 11 oder Sandwichplatte 12 ausgestaltet sein.

Fig. 2 zeigt ein Möbel 1 für ein Freizeitfahrzeug 2 in einer auszugsweisen, schematischen Darstellung bei einer Montage. In diesem Ausführungsbeispiel ist die Ausnehmung 10 als Schlüssellochfräsung ausgestaltet. Die Schlüssellochfräsung 10 ermöglicht nach dem Aufstecken des Verbindungselements 4 mit der zweiten Anbindungszone 8 ein seitliches Verschieben. Dadurch wird das erste Möbelteil 5 formschlüssig mit dem zweiten Möbelteil 6 verbunden.

Auf diese Weise wird das jeweilige Verbindungselement 4 in entsprechenden Ausnehmungen 9, 10, die als Bohrungen, Ausschnitte oder dergleichen ausgeführt sein können, nach vorbeschriebenen Prinzipien beispielsweise zunächst im ersten Möbelteil 5 befestigt. Dieser Teileverbund kann dann beispielsweise auf die als Schlüssellochfräsung 10 ausgestaltete Ausnehmung 10 im zweiten Möbelteil 6 aufgesteckt und durch seitliches Verschieben fest mit dem zweiten Möbelteil 6 verbunden werden.

Fig. 3 veranschaulicht den Systembaukasten 3 in einer Tabelle. Hierbei ergibt sich die Auswahl des jeweiligen Verbindungselements 4 entsprechend eines Verbindungselementtyps 15, 16, 17 für die mit Z1 bis Z4 gekennzeichneten Zeilen und die mit A bis E gekennzeichneten Spalten. Zur Vereinfachung der Darstellung sind hierbei nur die Verbindungselementtypen 15, 16, 17 dargestellt und gekennzeichnet. Weitere in diesem Ausführungsbeispiel mögliche Verbindungselementtypen sind in der Tabelle durch einen Haken gekennzeichnet. In diesem Ausführungsbeispiel im Rahmen des Systembaukastens 3 nicht zulässige Kombinationen sind durch ein Kreuz X gekennzeichnet.

Der Systembaukasten 3 zeichnet sich dadurch aus, dass mehrere Verbindungselementtypen 15, 16, 17 vorgesehen sind, wobei jeder Verbindungselementtyp 15, 16, 17 eine erste Anbindungszone 7 für das erste Möbelteil 5 und eine zweite Anbindungszone 8 für das zweite Möbelteil 6 aufweist. Die Verbindungselementtypen 15, 16, 17 können allerdings nicht nur durch die jeweiligen Anbindungszonen 7, 8 charakterisiert sein. Beispielsweise können sich die Verbindungselementtypen 15, 16, 17 weiter differenzieren, beispielsweise über unterschiedliche Größen, insbesondere Längen.

In diesem Ausführungsbeispiel unterscheiden sich die Verbindungselementtypen 15, 16, 17 bezüglich der ersten Anbindungszone 7 und auch der zweiten Anbindungszone 8. Die erste Anbindungszone 7 umfasst in diesem Ausführungsbeispiel 5 verschiedene Anbindungstypen 20A bis 20E, nämlich Reibschweißen, Leimen beziehungsweise Kleben, Schrauben, Spreizen und Doppelspreizen.

Bezüglich der zweiten Anbindungszone 8 unterscheiden sich die Verbindungselementtypen 15, 16, 17 in diesem Ausführungsbeispiel durch vier verschiedene Anbindungstypen 21, 22, 23, 24. Hierbei sind zwei runde Anbindungstypen 21, 22 und zwei flachovale Anbindungstypen 23, 24 vorgesehen. Hierbei ist jeweils ein Einfach-Pilzkopf 21, 23 und ein Zweifach-Pilzkopf 22, 24 vorgesehen.

Allerdings sind bestimmte Kombinationen ausgeschlossen, so dass insgesamt zehn Kombinationen verbleiben.

Der Systembaukasten 3 ist hierbei so ausgestaltet, dass die Verbindungselementtypen 17 bezüglich des Anbindungstyps 20E Doppelspreizen für die zweite Anbindungszone 8 nur mit den flachovalen Pilzköpfen 23, 24 kombiniert werden. Ferner ist der Systembaukasten 3 so ausgestaltet, dass die Anbindungstypen 20A bis 20D nur mit den runden Pilzköpfen 21, 22 kombiniert werden, wie es durch die Verbindungselementtypen 15, 16 veranschaulicht ist.

In diesem Ausführungsbeispiel umfasst der Systembaukasten 3 außerdem zusätzliche Sonderverbindungselementtypen 30, 31, 32. Der Sonderverbindungselementtyp 30 steht hierbei für den Anbindungstyp 20D Spreizen zur Verfügung. Die Sonderverbindungselementtypen 31, 32 stehen für den Anbindungstyp 20E Doppelspreizen zur Verfügung.

Für den Anbindungstyp 20A kann die Verbindung mit dem ersten Möbelteil 5 mittels einer Reibschweißtechnologie erfolgen. Für den Anbindungstyp 20B Leimen beziehungsweise Kleben kann die Verbindung mit dem ersten Möbelteil 5 geleimt oder geklebt sein. Für den Anbindungstyp 20C Schrauben wird die Verbindung zum ersten Möbelteil 5 geschraubt. Für den Anbindungstyp 20D Spreizen erfolgt die Verbindung zum ersten Möbelteil 5 mittels eines Spreizstifts. Bei dem Anbindungstyp 20E erfolgt die Verbindung ebenfalls mittels eines Spreizstifts. Die Anbindungstypen 20A bis 20D entsprechen Dübeln, während der Anbindungstyp 20E einem Doppeldübel entspricht.

Das jeweilige Verbindungselement 4 kann als Kunststoffspritzteil ausgestaltet sein.

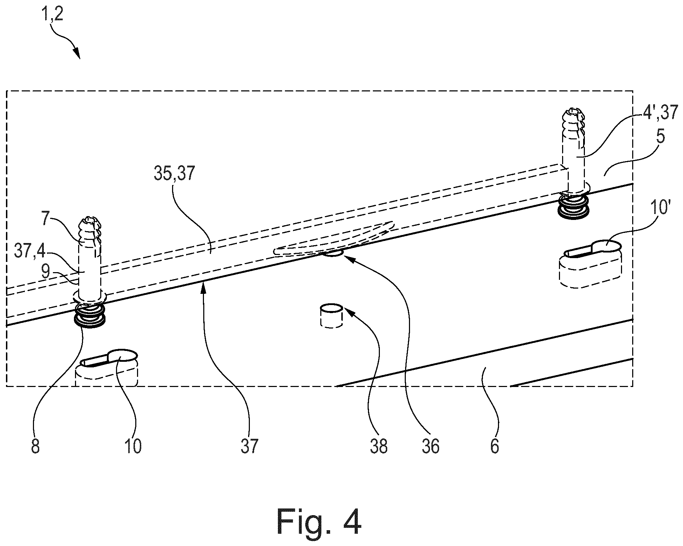

Fig. 4 zeigt ein Möbel 1 für ein Freizeitfahrzeug 2 in einer auszugsweisen, schematischen Darstellung bei einer Montage entsprechend einer abgewandelten Ausgestaltung. Die Verbindungselemente 4, 4' können hierbei mittels eines Stegs 35 miteinander zu einem Teil verbunden sein. Der Steg 35 kann beispielsweise als Kunststoffspritzgussteil 35 ausgeführt sein. Am Steg 35 kann eine federnd gelagerte Rastnase 36 angeformt sein. Das dadurch gebildete Komplettteil 37 wird mit dem ersten Möbelteil 5 verbunden. Die Rastnase 36 greift beim Fügen des ersten Möbelteils 5 an das zweite Möbelteil 6 in eine Ausnehmung 38, insbesondere Bohrung 38, am zweiten Möbelteil 6 ein. Hierdurch wird verhindert, dass sich im fertigverbauten Zustand die Möbelteile 5, 6 zueinander verschieben. Ein unbeabsichtigtes Lösen der Verbindung wird dadurch zuverlässig verhindert. Ausnehmungen 10, 10' am zweiten Möbelteil 6 sind in diesem Ausführungsbeispiel als Schlüssellochfräsungen 10, 10' ausgestaltet.

Somit kann eine einfache maschinelle Herstellung von Möbelteilen 5, 6 ermöglicht werden. Die Kontur der Möbelteile 5, 6 visualisiert hierbei die Einbaulage für die Verbindungselemente 4. Bei der Montage ist ein werkzeugloses Zusammenfügen der Möbelteile 5, 6 möglich. Insbesondere das zweite Möbelteil 6 kann aus Leichtbaumaterialien, insbesondere einer Sandwichplatte 12, ausgebildet sein.

Vorteilhaft ist es auch, dass die Teilegeometrie den Zusammenbau für den Monteur visualisiert. Dadurch ergibt sich eine hohe Prozesssicherheit. Ferner kann eine hohe Produktqualität erreicht werden. Die Verbindungen sind so ausgeführt, dass sie für den Endkunden zumindest im Wesentlichen unsichtbar sind.

Somit ist ein Systembaukasten 3 für Verbindungselemente 4 zur verdeckten und werkzeuglosen Montage von Möbelteilen 5, 6 angegeben. Ein bevorzugter Einsatzzweck der montierten Möbel 1 besteht für als Campingfahrzeuge 2 ausgebildete Freizeitfahrzeuge 2. Ausnehmungen 9, 10 können beispielsweise automatisiert auf CNC-Maschinen hergestellt werden. Dadurch kann eine automatisierte Vorbereitung der Möbelteile 5, 6 erfolgen.

Die Erfindung ist nicht auf die beschriebenen Ausführungsformen beschränkt.

## Patentansprüche

1. Systembaukasten (3) für Verbindungselemente (4), die zur verdeckten und werkzeuglosen Montage von Möbelteilen (5, 6) eines Freizeitfahrzeugs (2), insbesondere eines Wohnmobils oder eines Wohnwagens, dienen, mit mehreren Verbindungselementtypen (15, 16, 17), wobei jeder Verbindungselementtyp (15, 16, 17) zumindest durch eine erste Anbindungszone (7) für ein erstes Möbelteil (5) und eine zweite Anbindungszone (8) für ein zweites Möbelteil (6) charakterisiert ist.

2. Systembaukasten nach Anspruch 1,
**dadurch gekennzeichnet,**
**dass** sich die Verbindungselementtypen (15, 16, 17) bezüglich der ersten Anbindungszone (7) unterscheiden, wobei die erste Anbindungszone (7) je Verbindungselementtyp (15, 16, 17) aus zumindest zwei Anbindungstypen (20A-20E), die Reibschweißen und/oder Leimen beziehungsweise Kleben und/oder Schrauben und/oder Spreizen und/oder Doppelspreizen umfassen, ausgewählt ist.

3. Systembaukasten nach Anspruch 1 oder 2,
**dadurch gekennzeichnet,**
**dass** sich die Verbindungselementtypen (15, 16, 17) bezüglich der zweiten Anbindungszone (8) unterscheiden, wobei die zweite Anbindungszone (8) je Verbindungselementtyp (15, 16, 17) aus zumindest zwei Anbindungstypen (21, 22, 23, 24), die zumindest einen Einfach-Pilzkopf (21, 23) und/oder zumindest einen Zweifach-Pilzkopf (22, 24) umfassen, ausgewählt sind.

4. Systembaukasten nach Anspruch 3,
**dadurch gekennzeichnet,**
**dass** die Anbindungstypen (21, 22, 23, 24) für die zweite Anbindungszone (8) Einfach-Pilzköpfe (21, 23), die runde Einfach-Pilzköpfe (21) und/oder flachovale Einfach-Pilzköpfe (23) umfassen, und/oder Zweifach-Pilzköpfe (22, 24), die runde Zweifach-Pilzköpfe (22) und/oder flachovale Zweifach-Pilzköpfe (24) umfassen, umfasst.

5. Systembaukasten nach einem der Ansprüche 1 bis 4,
**dadurch gekennzeichnet,**
**dass** die Verbindungselementtypen (15, 16, 17) so ausgeführt sind, dass der Anbindungstyp flachovaler Pilzkopf (23, 24) beziehungsweise die Anbindungstypen flachovale Pilzköpfe (23, 24) der zweiten Anbindungszone (8) nur mit dem Anbindungstyp (20E) Doppelspreizen der ersten Anbindungszone (7) kombiniert ist.

6. Systembaukasten nach einem der Ansprüche 1 bis 5,
**dadurch gekennzeichnet,**
**dass** die Verbindungselementtypen (15, 16, 17) so ausgeführt sind, dass der Anbindungstyp runder Pilzkopf (21, 22) beziehungsweise die Anbindungstypen runde Pilzköpfe (21, 22) nur mit den Anbindungstypen (20A-20D) Reibschweißen, Leimen beziehungsweise Kleben, Schrauben und Spreizen kombiniert sind.

7. Systembaukasten nach einem der Ansprüche 1 bis 6,
**dadurch gekennzeichnet,**
**dass** zumindest ein zusätzlicher Sonderverbindungselementtyp (30, 31, 32) vorgesehen ist.

8. Möbel (1) für ein Freizeitfahrzeug (2), insbesondere für ein Wohnmobil oder einen Wohnwagen mit einem ersten Möbelteil (5) und zumindest einem zweiten Möbelteil (6), die durch zumindest ein Verbindungselement (4) verbunden sind, das aus einem Systembaukasten (3) nach einem der Ansprüche 1 bis 7 ausgewählt ist.

9. Möbel nach Anspruch 8,
**dadurch gekennzeichnet,**
**dass** das zweite Möbelteil (6) eine Sandwichplatte (12) aufweist.

10. Freizeitfahrzeug (2), insbesondere Wohnmobil oder Wohnwagen, mit zumindest einem Möbel (1) nach einem der Ansprüche 8 oder 9.

11. Montageverfahren zur Montage eines Möbels (1) für ein Freizeitfahrzeug (2), insbesondere für ein Wohnmobil oder einen Wohnwagen, wobei ein erstes Möbelteil (5) mittels zumindest eines Verbindungselements (4) mit einem zweiten Möbelteil (6) verbunden wird und wobei das Verbindungselement (4) aus einem Systembaukasten (3) nach einem der Ansprüche 1 bis 7 ausgewählt wird.
